# FASCICULE DE BREVET EUROPEEN

(11) **EP 0 938 362 B1**
(45) Date de publication et mention de la délivrance du brevet: **28.08.2002**
(21) Numéro de dépôt: 97919113.7
(22) Date de dépôt: 17.09.1997
(51) Int. Cl.: B01D 45/16, B01D 53/94, F01N 3/02, F01N 3/08

(54) **PROCEDE D'ELIMINATION DES POUSSIERES D'UN FLUX GAZEUX**
VERFAHREN ZUR ABTRENNUNG VON STAUB AUS EINEM GASSTROM
METHOD FOR ELIMINATING DUST FROM A GAS STREAM

(30) Priorité: 18.09.1996 FR 9611573
(43) Date de publication de la demande: 01.09.1999
(73) Titulaire: Bellini, Jacques, 13008 Marseille (FR)
(72) Inventeur: Bellini, Jacques, 13008 Marseille (FR)
(74) Mandataire: Roman, Michel
(86) Numéro de dépôt international: FR9701638
(87) Numéro de publication internationale: WO98011975

(56) Documents cités:
- DE-A- 2 649 215
- DE-A- 4 415 672
- DE-C- 641 876
- US-A- 3 951 813
- US-A- 4 285 916
- US-A- 5 406 790
- US-A- 5 429 250
- PATENT ABSTRACTS OF JAPAN vol. 7, no. 141 (M-223) [1286] , 21 juin 1983 & JP 58 053620 A (FUJI DENKI SOUGOU KENKYUSHO K.K.), 30 mars 1983,

## Description

La présente invention a pour objet un procédé et un dispositif d'élimination des poussières d'un flux gazeux et en particulier des particules submicroniques.

La principale application de l'invention réside dans la dépollution des effluents gazeux avant leur rejet à l'atmosphère et à l'épuration de l'atmosphère lorsque la dépollution à la source, malgré les mesures prises, aura été jugée insuffisante à cause de la multiplicité des points d'émissions ou de conditions climatologiques particulièrs. L'objectif essentiel est d'installer en zones urbaines exposées des stations de traitement de l'air pour en éliminer les polluants les plus dangereux et les plus inconfortables.

La pollution de l'air d'origine domestique demeure très secondaire et les émissions d'origine industrielle sont aujourd'hui généralement bien contrôlées. Les installations importantes sont équipées de systèmes de filtration et de traitement des fumées, la dilution de celles-ci dans l'atmosphère par l'intermédiaire des cheminées permettant de réduire les concentrations des différents polluants à des niveaux acceptables.

La principale cause de la pollution atmosphérique en milieu urbain provient des véhicules à moteur thermique. Les mesures réglementaires prises depuis quelques années ont limité l'aggravation de la situation, mais l'augmentation de la circulation n'a pas permis d'amélioration sensible. les concentrations maximales admissibles sont régulièrement dépassées dans les principales villes du monde. Les autorités ne disposent d'aucun moyen satisfaisant pour réagir en cas de dépassement des concentrations admissibles.

Les polluants reconnus comme les plus dangereux sont :
- Les composés organiques volatils (COV) : benzène, aldéhydes, 1:3-butadiène. Le 1:3-butadiène est considéré comme étant, de loin, le polluant le plus dangereux, en terme de risque de cancer, émis par les véhicules à moteur thermique.
- Les particules submicroniques qui transportent ces composés cancérigènes au plus profond des poumons : à l'intérieur des vésicules pulmonaires. Une particule de 0,3 micromètre peut introduire jusqu'à 39 composés organiques dont 15 reconnus cancérigènes dans une vésicule pulmonaire. Les particules émises par les moteurs (surtout les moteurs diesel qui émettent 50 à 80 % de particules de plus que les moteurs à essence) se composent à 80 % de particules de taille inférieure à un micromètre (µ).

On ne sait pas capter et détruire ces particules par un dispositif intégré aux véhicules légers. Une réduction de 20 % de la pollution particulaire pourrait éviter entre 150 et 250 décès par an dans une ville de 250 000 habitants (source : Société Française pour la Santé Publique).

Quelle que soit la sévérité des normes, cela n'empêchera pas l'accumulation régulière de polluants en certains lieux et à certaines heures. Quels que soient les moyens mis en oeuvre, la multiplicité des émetteurs ne permettra jamais le contrôle efficace des dispositifs particuliers anti-pollution.

Les moyens actuels de filtration de poussières de 0,3 µ, utilisés en laboratoire, fondés sur le tri des particules suivant leur taille (une molécule d'oxygène est à peine quinze fois plus grande qu'une particule de 0,3 µ) ne sont pas utilisables pour traiter de grands volumes d'air à cause de leur coût, de leur besoin en maintenance et de leur consommation d'énergie.

La présente invention a pour objectif de remédier à cet état de choses. Elle permet en effet de réaliser, à des coûts d'investissement et de fonctionnement raisonnables, des systèmes d'épuration ne présentant aucune nouvelle nuisance et dont les dimensions sont compatibles avec une installation en milieu urbain et permettent d'envisager des systèmes mobiles pour interventions sur accident de pollution.

Ces dispositifs sont à même de capter les particules de 0,3 à 10 micromètres, de détruire les particules combustibles, y compris les composés organiques volatils agglutinés sur celles-ci, de stocker les particules incombustibles, et d'éliminer tout ou partie des autres polluants gazeux dangereux.

Le procédé est fondé sur la séparation par centrifugation des particules à extraire du flux gazeux à traiter, grâce à leur forte différence de masse comparativement aux molécules d'air, et sur la destruction de ces particules par pyrolyse, la séparation étant réalisée dans un conduit hélicoïdal multispires pourvu à sa périphérie interne de pièges arrêtant les particules lourdes et communicant chacun avec une chambre de pyrolyse dans laquelle elles sont périodiquement aspirées et où sont détruits les éléments combustibles et stockés les éléments incombustibles pour évacuation lors des opérations de maintenance.

Sur les dessins annexés, donnés à titre d'exemples non limitatifs de formes de réalisation de l'objet de la présente demande de brevet :
la figure 1 est un schéma illustrant le principe de base du système d'épuration,
la figure 2 est une coupe transversale à plus grande échelle d'une spire de conduit hélicoïdal montrant le trajet d'une particule piégée,
la figure 3 est un agrandissement du détail A de la figure 2,
les figures 4, 5, 6 représentent respectivement la partie interne, la partie externe et les deux parties assemblées d'une cellule de centrifugation constituée d'un noyau inséré dans un fourreau formant un conduit hélicoïdal
et la figure 7 montre le schéma d'une installation complète de traitement comportant plusieurs cellules de centrifugation.

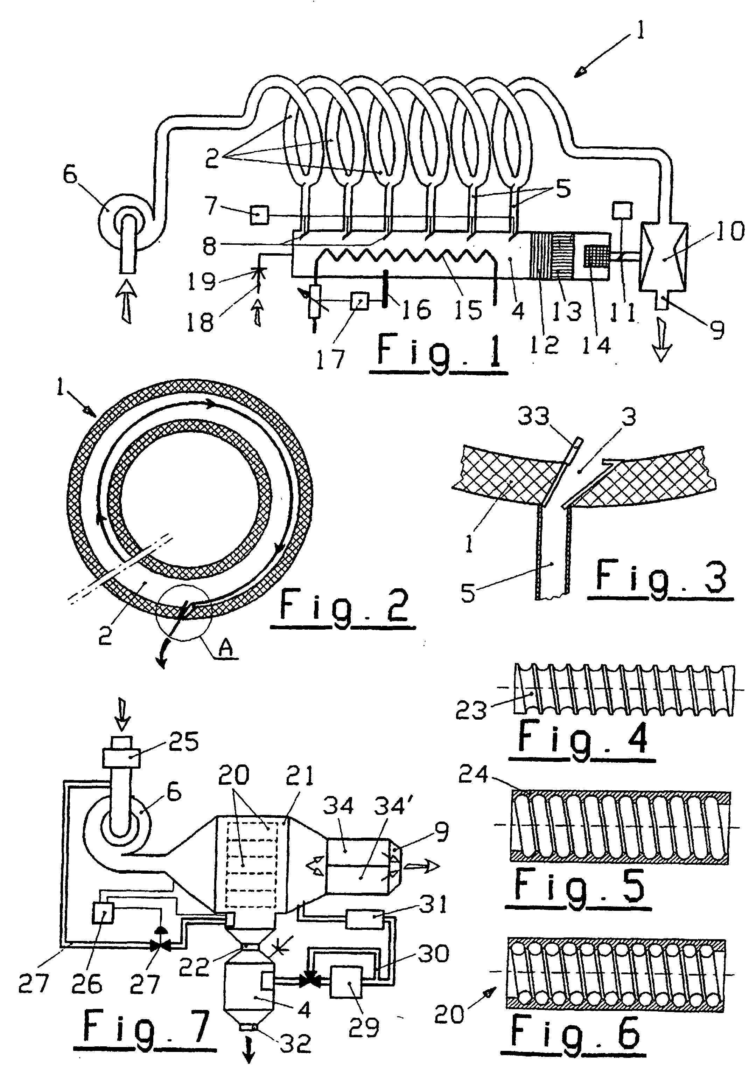

Le dispositif, figures 1 à 3, est constitué d'un conduit hélicoïdal 1 comportant plusieurs spires 2 équipées chacune d'un ou plusieurs pièges 3 disposés sur la partie de la paroi interne du conduit correspondant au plus grand diamètre des spires, et destinés à arrêter les particules à extraire. Ces pièges, communicant avec une chambre de pyrolyse 4 par des tubes de transfert 5 sont constitués chacun d'un insert formant un conduit conique à travers la paroi du conduit 1 et se terminant par une plaque d'arrêt 33 de quelques dixièmes de millimètres placée sur la face interne du conduit.

Les gaz poussiéreux à traiter sont aspirés par une bouche d'admission au moyen d'un appareil d'aspiration 6 permettant de leur communiquer la vitesse nécessaire, au moins 5 m/s, et dirigés vers le conduit hélicoïdal 1 où les poussières, repoussées par l'effet de la force centrifuge vers le plus grand diamètre des spires 2, sont arrêtées par les pièges 3. Un système automatique 7, commandé par une minuterie ou un détecteur, ouvre périodiquement des clapets de fermeture 8 montés sur chaque tube de transfert 5 permettant ainsi aux poussières d'être aspirées dans la chambre de pyrolyse 4.

Après leur passage dans le conduit hélicoïdal 1, les gaz dépoussiérés sont rejetés à l'atmosphère par une bouche de sortie 9 après passage dans un venturi 10 dont la bouche aspirante est reliée par l'intermédiaire d'une vanne de régulation 11 à la sortie de la chambre de pyrolyse 4 mettant celle-ci en dépression pour faciliter le transfert des poussières.

Les gaz provenant de la chambre de pyrolyse 4 dépollués par passage sur des catalyseurs de réduction 12 et d'oxydation 13 et débarrassés des poussières incombustibles par un filtre 0,3 micromètre 14, sont aspirés par le venturi 10 et également rejetés à l'atmosphère par la bouche de sortie 9. Les poussières transférées dans la chambre de pyrolyse sous l'effet conjugués de la pression dynamique provenant du circuit hélicoïdal 1 et de la dépression créée par le venturi 9 sont détruites par pyrolyse pour leur partie combustible, et stockées avant le filtre de sortie 14 pour leur partie incombustible.

La pyrolyse est rendue possible grâce à un moyen de chauffage 15 alimenté par une source d'énergie externe et maintenant la chambre de pyrolyse à la température nécessaire, cet apport de chaleur étant mesuré et régulé au moyen d'une sonde de température 16 et d'un régulateur de température 17.

L'oxygène nécessaire à la pyrolyse complète, au cas où le gaz vecteur n'en contiendrait pas suffisamment, (gaz d'échappement ou de cheminée), est fourni par une bouche d'admission d'air frais 18 munie d'un système anti-retour 19, cette admission, contrôlée par un limiteur de débit, étant assurée automatiquement par la dépression produite par le venturi.

Si le flux de gaz est déjà à haute température (échappement de moteur thermique, fumée d'usine), la température de la chambre de catalyse 4 peut être maintenue au moyen d'un échangeur de chaleur dans lequel passe le gaz avant ou après traitement.

La séparation des poussières pourra être réalisées par une série de cellules de centrifugation 20 de faible dimension (figures 4 à 7) montées en parallèles à l'intérieur d'une chambre étanche 21 de récupération des poussières communicant avec la chambre de pyrolyse 4 par une vanne d'admission 22 à ouverture périodique, chacune de ces cellules, avantageusement constituée d'un noyau 23 (figure 4) inséré dans un fourreau 24 (figure 5), formant un conduit hélicoïdal 1 indépendant. La figure 7 montre une installation utilisant ce type de cellules et comportant, en plus des équipements décrits ci-dessus :
- un filtre 50 micromètres 25 à l'admission,
- un régulateur de pression différentielle 26 commandant une vanne motorisée 27 montée sur un circuit de recyclage 28 reliant la chambre étanche 21 au conduit d'admission, de manière à maintenir dans cette chambre étanche une légère dépression par rapport à la pression régnant dans les cellules 20,
- une pompe à vide 29 aspirant les poussières dans la chambres de pyrolyse 4 à travers le filtre 14 pourvu d'un circuit de décolmatage 30, l'air dépoussiéré aspiré par la pompe à vide étant injecté dans le circuit principal à la sortie des cellules de centrifugation, après passage dans un refroidisseur 31.

Les poussières incombustibles sont sorties de la chambre de pyrolyse par une vanne d'évacuation 32.

L'air débarrassé des particules par le dispositif décrit demeure chargé de polluants gazeux qu'il est possible d'éliminer plus ou moins complètement grâce une double batterie de filtres 34, 34' (figure 7) à faible perte de charge montés à la sortie du circuit de centrifugation et constitués d'adsorbants, un seul filtre étant actif à un moment donné, l'autre étant en phase de régénération (ou désorption).

Ces adsorbants retiennent, jusqu'à saturation, les composés gazeux toxiques qu'on veut éliminer (benzène, dioxyde d'azote, dioxyde de souffre, 1:3 butadiène, hydrogène sulfuré, N20, C02, CO, etc), et provoque en outre la dissociation de l'ozone, très instable, en oxygène.

Lorsqu'un des deux filtres est saturé, le flux gazeux est basculé sur l'autre filtre et le filtre saturé est mis en cycle de régénération grâce à un circuit fermé de désorption et réaction catalytique, ouvert vers l'atmosphère à la fin du cycle et comprenant, outre le filtre à régénérer 34 ou 34', un circulateur, un ou deux fours catalytiques (un réducteur pour les oxydes d'azote et un oxydant pour les composés organiques volatils et l'oxyde de carbone), une vanne automatique pour l'admission, en fin de cycle de régénération, d'air pur provenant de la sortie du filtre actif et une sortie d'air vers l'atmosphère, à travers le filtre actif.

En début de cycle de régénération, le circulateur fait circuler l'air en circuit fermé du filtre en régénération vers le ou les four(s) catalytique(s) où se produisent alors les réactions catalytiques qui transforment les composés initiaux qui sont désorbés du filtre en CO2, H2O et N2. A chaque passage dans le four, une partie de ces composés toxiques est transformée et leur teneur dans le gaz diminue, jusqu'à ce qu'il ne reste plus que de l'azote, de l'oxygène de l'eau et du dioxyde de carbone. Pour nettoyer complètement le filtre avant sa remise en activité, de l'air pris à la sortie du filtre actif est injecté dans le circuit et renvoyé à l'entrée du filtre actif pour traitement.

A la fin du cycle de régénération, le filtre est refroidi par un flux d'air pur et froid provenant du filtre actif pour lui rendre son efficacité d'adsorbant qui diminue lorsque la température augmente.

L'intérêt majeur de ce dispositif réside dans l'économie d'énergie qu'il permet par l'utilisation d'un cycle fermé pendant lequel il n'est nécessaire d'apporter que l'énergie correspondant aux pertes thermiques du circuit, bien sûr calorifugé.

On peut avantageusement prévoir un générateur d'ozone qui réagira avec le NO pour donner du N02 qui est plus facilement absorbable que le NO.

Le-procédé selon l'invention consiste à faire subir au flux de gaz à traiter, et donc aux particules contenues, une centrifugation forcée dans les spires 2 du conduit hélicoïdal 1 de façon à ce que les particules, plus lourdes que les molécules d'air, soient entraînées sous l'effet de la force centrifuge vers la paroi correspondant plus grand diamètre du conduit hélicoïdal (une particule du type de celles émises par les moteurs diesel, et d'une taille de 0,3 µ pèse 7 millions de fois plus qu'une molécule d'oxygène).

Les particules entraînées par la force centrifuge atteignent cette paroi au bout d'un certain temps dépendant de la vitesse du flux, du poids des particules donc de leurs dimensions, du rayon de l'hélice et du diamètre du conduit, et sont arrêtées par les pièges 3, puis éjectées du conduit hélicoïdal 1 vers la chambre de pyrolyse 4 accompagnées par une partie du flux aspiré par la dépression créée par le venturi 10 dans ou la pompe à vide 29.

La longueur du conduit 1 et le nombre de spires 2 nécessaires pour que les particules les moins lourdes atteignent la paroi est calculée en tenant compte des divers paramètres indiqués ci-dessus. Les calculs sont établis en tenant compte des forces de résistance à l'avancement dues à la viscosité de l'air dans lequel se déplacent les particules et donnent, par ailleurs, en fonction de la valeur choisie des divers paramètres, les pertes de charge du circuit et donc le dimensionnement et la puissance de l'appareil d'aspiration faisant circuler le flux gazeux dans le circuit.

Après leur éjection du conduit hélicoïdal, les particules sont dirigées vers la chambre de pyrolyse 4 portée à la température nécessaire pour brûler les particules combustibles et les composés qu'elles transportent, et les gaz provenant de la pyrolyse sont renvoyés à l'atmosphère à travers un filtre adsorbant. La petite partie de l'air qui s'est échappé du circuit en même temps que les particules est recyclé par renvoi à l'aspiration ou rejeté à l'atmosphère.

Le traitement de la pollution atmosphérique n'est pas la seule application de ce dispositif. Son emploi peut par exemple être envisagé pour certains logements particuliers (asthmatiques), pour des établissements ouverts au public en vue de l'élimination des poussières de tabac, pour des salles blanches (hôpitaux, laboratoires, ateliers de fabrication des semi-conducteurs, etc), pour des cheminées d'usines, des ateliers poussiéreux (scieries, cimenteries), pour le traitement de l'amiante en suspension (peut éviter la destruction de certains immeubles), pour des chantiers (dispositif mobile) ou encore comme dispositif d'intervention mobile à la disposition des pompiers pour les interventions sur risque technologique.

Le positionnement des divers éléments constitutifs donne à l'objet de l'invention un maximum d'effets utiles qui n'avaient pas été, à ce jour, obtenus par des dispositifs similaires.

## Revendications

1. Dispositif d'élimination des poussières d'un flux gazeux et en particulier des particules submicroniques, ayant surtout pour but l'épuration de l'atmosphère lorsque la dépollution à la source est insuffisante à cause de la multiplicité des points d'émission ou de conditions climatologiques particulières, l'objectif essentiel étant l'installation en zones urbaines exposées de stations de traitement de l'air pour en éliminer les polluants les plus dangereux et les plus inconfortables,
comprenant une bouche d'admission du gaz poussiéreux alimentée par un flux existant ou par un appareil d'aspiration (6), de manière à ce que les gaz poussiéreux pénètrent à une vitesse au moins égale à 5 m/s dans un circuit d'épuration du dispositif constitué d'au moins un conduit hélicoïdal (1) comportant plusieurs spires (2) équipées chacune d'un ou plusieurs pièges (3) disposés sur la partie de la paroi interne du conduit correspondant au plus grand diamètre des spires, et destinés à arrêter les particules à extraire, un système d'ouverture périodique automatique permettant le transfert des poussières ainsi arrêtées dans une chambre de pyrolyse (4) du dispositif maintenue à la température nécessaire à la pyrolyse par un moyen de chauffage (15) alimenté par une source de chaleur externe, ladite chambre de pyrolyse étant déterminée pour détruire les particules combustibles et stocker les éléments incombustibles pour évacuation lors des opérations de maintenance, un moyen d'aspiration créant une dépression pour faciliter le transfert des poussières et évacuer les gaz épurés à l'atmosphère à travers un système de filtres retenant les éléments incombustibles.

2. Dispositif selon la revendication 1, se caractérisant par le fait que les pièges (3) sont constitués d'un insert formant un conduit conique à travers la paroi du conduit hélicoïdal (1) se terminant par une plaque d'arrêt (33) de quelques dixièmes de millimètres placée sur la face interne dudit conduit et inclinée contre le sens de la circulation du fluide.

3. Dispositif selon l'une quelconque des revendications précédentes, se caractérisant par le fait que les pièges (3), communiquent avec la chambre de pyrolyse (4) par des tubes de transfert (5) comportant chacun un clapet de fermeture (8) ouvert périodiquement par un système automatique (7) commandé par minuterie ou détecteur, de manière à permettre aux poussières d'être aspirées dans la chambre de pyrolyse 4.

4. Dispositif selon l'une quelconque des revendications 1 et 2, se caractérisant par le fait que la séparation des poussières est réalisées par une série de cellules de centrifugation (20) montées en parallèles à l'intérieur d'une chambre étanche (21) de récupération des poussières communicant avec la chambre de pyrolyse (4) par une vanne d'admission (22) à ouverture périodique, chacune de ces cellules formant un conduit hélicoïdal (1) indépendant.

5. Dispositif selon l'une quelconque des revendications précédentes, se caractérisant par le fait que le moyen d'aspiration créant une dépression dans la chambre de pyrolyse (4) est constitué d'un venturi (10) traversé par les gaz dépoussiérés après leur passage dans le conduit hélicoïdal (1), et dont la bouche aspirante est reliée par l'intermédiaire d'une vanne de régulation (11) à la sortie de ladite chambre de pyrolyse.

6. Dispositif selon l'une quelconque des revendications 1 à 4, se caractérisant par le fait que le moyen d'aspiration créant une dépression dans la chambre de pyrolyse (4) est constitué d'une pompe à vide (29) aspirant les poussières à travers un filtre (14) pourvu d'un circuit de décolmatage (30), l'air dépoussiéré aspiré par la pompe à vide étant injecté dans le circuit principal à la sortie des cellules de centrifugation, après passage dans un refroidisseur (31).

7. Dispositif selon l'une quelconque des revendications précédentes, se caractérisant par le fait que les gaz provenant de la chambre de pyrolyse (4) sont dépollués par passage sur des catalyseurs de réduction (12) et d'oxydation (13) et débarrassés des poussières incombustibles par un filtre 0,3 micromètre (14).

8. Dispositif selon l'une quelconque des revendications précédentes, se caractérisant par le fait que l'oxygène nécessaire à la pyrolyse complète, au cas où le gaz vecteur n'en contiendrait pas suffisamment, est fourni par une bouche d'admission d'air frais (18) munie d'un système anti-retour (19), cette admission, contrôlée par un limiteur de débit, étant assurée par la dépression produite dans la chambre de pyrolyse (4).

9. Dispositif selon l'une quelconque des revendications précédentes, se caractérisant par le fait que la température de la chambre de catalyse 4 est maintenue au moyen d'un échangeur de chaleur dans lequel passe le gaz à traiter et disposé avant ou après le circuit d'épuration.

10. Dispositif selon l'une quelconque des revendications précédentes, se caractérisant par le fait qu'une double batterie de filtres (34, 34') à faible perte de charge constitués d'adsorbants est montée à la sortie du circuit de centrifugation, lesdits adsorbants retenant jusqu'à saturation les composés gazeux toxiques à éliminer tels que benzène, dioxyde d'azote ou de souffre, 1:3 butadiène, hydrogène sulfuré, N2O, C02, CO, etc, et provoquant la dissociation de l'ozone en oxygène, les deux filtres (34, 34') étant agencés de manière à ce qu'un seul filtre soit actif à un moment donné, l'autre étant en phase de régénération grâce à un circuit fermé de désorption et réaction catalytique, ouvert vers l'atmosphère à la fin du cycle et comprenant, outre le filtre à régénérer 34 ou 34', un circulateur, un ou deux fours catalytiques (un réducteur pour les oxydes d'azote et un oxydant pour les composés organiques volatils et l'oxyde de carbone), une sortie d'air vers l'atmosphère, à travers le filtre actif, commandée par vanne motorisée, et enfin une vanne automatique pour l'admission en fin de cycle de régénération d'air pur provenant de la sortie du filtre actif et destiné à nettoyer complètement le filtre avant sa remise en activité et à le refroidir pour lui rendre son efficacité d'adsorbant.

11. Dispositif selon la revendication 10, se caractérisant par le fait que le circuit fermé de régénération des filtres (34, 34') comporte un générateur d'ozone qui réagira avec l'oxyde d'azote pour donner du dioxyde d'azote.

12. Procédé d'élimination des poussières d'un flux gazeux et en particulier des particules submicroniques, basé sur l'utilisation du dispositif selon les revendications précédentes,
dans lequel l'on fait subir audit flux gazeux une centrifugation forcée pour provoquer la séparation des particules à extraire grâce à leur forte différence de masse comparativement aux molécules du gaz, et sur la destruction de ces particules par pyrolyse, la séparation étant réalisée dans le ou les conduits hélicoïdaux (1) multispires pourvus à leur périphérie interne de pièges (3) arrêtant les particules lourdes et communicant chacun avec la chambre de pyrolyse (4) dans laquelle elles sont périodiquement aspirées et où sont détruits les éléments combustibles et stockés les éléments incombustibles pour évacuation lors des opérations de maintenance.

## Patentansprüche

1. Vorrichtung zur Entfernung von Staubteilchen aus einem Gasstrom, insbesondere von submikroskopisch kleinen Teilchen, vor allem zum Zweck der Reinigung der Atmosphäre, wenn die Reinigung an der Quelle wegen der großen Zahl der Emissionsorte oder besonderer klimatischer Bedingungen ungenügend ist, insbesondere mit dem Ziel, Luftbehandlungsanlagen in besonders belasteten Siedlungsgebieten zu installieren, um die gefährlichsten und unangenehmsten Schadstoffe zu entfernen, bestehend aus einer Ansaugöffnung für das staubhaltige Gas, durch die ein vorhandener oder von einem Ansauggerät (6) gelieferter Gasstrom eintritt, so dass die staubhaltigen Gase mit einer Geschwindigkeit von mindestens 5 m/s in einen Reinigungskreislauf der Anlage eintreten, der aus mindestens einem spiralförmigen Kanal (1) mit mehreren Windungen (2) besteht, die jede eine oder mehreren Fallen (3) auf dem Teil der Innenwand des Kanals besitzen, der dem größten Durchmesser der Windungen entspricht, und die dazu bestimmt sind, die zu entfernenden Teilchen anzuhalten, wobei ein automatisches, sich regelmäßig öffnendes System die auf diese Weise angehaltenen Stäube in eine Pyrolysekammer (4) der Anlage leitet, deren Temperatur von einer, durch eine externe Wärmequelle versorgte Heizanlage (15) auf der zur Pyrolyse notwendigen Temperatur gehalten wird, und die dazu bestimmt ist, die brennbaren Teilchen zu vernichten und die nicht brennbaren Elemente bis zur ihrer Entleerung bei Wartungsarbeiten zu lagern, wobei eine Ansaugvorrichtung einen Unterdruck erzeugt, um den Transport der Stäube und das Ableiten der gereinigten Gase in die Atmosphäre durch ein die nicht brennbaren Elemente zurückhaltendes Filtersystem erleichtert.

2. Vorrichtung nach Anspruch 1, **gekennzeichnet dadurch, dass** die Fallen (3) aus einem Einsatz bestehen, der einen, durch die Wand des spiralförmigen Kanals (1) hindurchgehenden, kegelförmigen Kanal bildet und mit einer Prallplatte (33) von einigen zehntel Millimetern endet, die auf der Innenseite des genannten Kanals angeordnet und entgegen der Stromrichtung geneigt ist.

3. Vorrichtung nach einem der vorstehenden Ansprüche, **gekennzeichnet dadurch, dass** die Fallen (3) über Transferrohre (5) mit der Pyrolysekammer (4) kommunizieren, von denen jedes eine Verschlussklappe (8) besitzt, die regelmäßig durch ein automatisches, von einem Zeitgeber oder einer Sonde gesteuertem System (7) geöffnet wird, so dass der Staub in die Pyrolysekammer 4 angesaugt werden kann.

4. Vorrichtung nach einem der Ansprüche 1 oder 2, **gekennzeichnet dadurch, dass** das Abscheiden der Stäube durch eine Reihe von Zentrifugenzellen (20) erfolgt, welche in einer dichten Kammer (21) zum Auffangen der Stäube parallel geschaltet sind und mit der Pyrolysekammer (4) durch ein sich regelmäßig öffnendes Zufuhrventil (22) in Verbindung stehen, wobei jede dieser Zellen einen unabhängigen spiralförmigen Kanal (1) bildet.

5. Vorrichtung gemäss einem der vorstehenden Ansprüche, **gekennzeichnet dadurch, dass** die Ansaugvorrichtung, die einen Unterdruck in der Pyrolysekammer (4) erzeugt, aus einer Venturidüse (10) besteht, die von den, vom Staub befreiten Gasen nach dem Passieren des spiralförmigen Kanals (1) durchströmt wird, und deren Ansaugöffnung über ein Regelventil (11) mit dem Ausgang der Pyrolysekammer verbunden ist.

6. Vorrichtung nach einem der Ansprüche 1 bis 4, **gekennzeichnet dadurch, dass** die Ansaugvorrichtung, die einen Unterdruck in der Pyrolysekammer(4) erzeugt, aus einer Vakuumpumpe (29) besteht, welche die Stäube über einen Filter (14) ansaugt, der mit einen Reinigungskreislauf (30) besitzt, wobei die von der Vakuumpumpe angesaugte entstaubte Luft am Ausgang der Zentrifugenzellen nach dem Durchlaufen eines Kühlers (31) in den Hauptkreislauf eingeleitet wird.

7. Vorrichtung nach einem der vorstehenden Ansprüche, **gekennzeichnet dadurch, dass** die aus der Pyrolysekammer(4) kommenden Gase über Reduktionskatalysatoren (12) und Oxidationskatalysatoren (13) geleitet und gereinigt werden, und aus ihnen die nicht brennbaren Stäube durch einen 0,3-Mikrometer-Filter (14) entfernt werden.

8. Vorrichtung nach einem der vorstehenden Ansprüche, **gekennzeichnet dadurch, dass** der zur vollständigen Pyrolyse notwendige Sauerstoff, falls das Trägergas nicht ausreichend davon enthält, durch eine Frischluftdüse (18) mit Rückschlagsystem (19) zugeführt wird, und die Frischluft aufgrund des Unterdrucks in der Pyrolysekammer (4) und durch ein Durchsatzbegrenzungsventil gesteuert zugeführt wird.

9. Vorrichtung nach einem der vorstehenden Ansprüche, **gekennzeichnet dadurch, dass** die Temperatur in der Katalysekammer 4 mit Hilfe eines Wärmetauschers gehalten wird, der vor oder nach dem Reinigungskanal angeordnet ist und von dem zu behandelnden Gas durchströmt wird.

10. Vorrichtung nach einem der vorstehenden Ansprüche, **gekennzeichnet dadurch, dass** eine doppelte Filterbatterie (34, 34') mit geringem Druckverlust aus adsorbierenden Stoffen am Ausgang des Zentrifugierkreislaufs montiert ist, in der die adsorbierenden Stoffe die zu entfernenden giftigen Gaskomponenten, wie Benzol, Schwefel- oder Stickstoffdioxid, 1:3-Butadien, Schwefelwasserstoffe, N₂O, CO₂, CO usw. bis zu ihrer Sättigung zurückhalten und eine Aufspaltung des Ozons in Sauerstoff bewirken, und die beiden Filter (34, 34') so angeordnet sind, dass zu einem bestimmten Zeitpunkt jeweils ein Filter in Betrieb ist, während der andere in einem geschlossenen Desorptions- und Katalysekreislaufs regeneriert wird, der am Ende des Regenerationszyklus zur Atmosphäre hin geöffnet wird, und die außer dem regenerierbaren Filter 34 oder 34' eine Umlaufpumpe besitzt, sowie einen oder zwei Katalyseöfen (einen Reduktionsofen für die Stickoxide und einen Oxidationsofen für die flüchtigen organischen Komponenten und Kohlenmonoxid), einen von einem Ventil mit Stellmotor gesteuerten, über den aktiven Filter gehenden Luftauslass an die Atmosphäre sowie ein automatisches Ventil um Frischluft am Ausgang des aktiven Filters am Ende des Regenerierungszyklus anzusaugen und den Filter vor seiner Wiederinbetriebnahme vollständig zu reinigen und zu kühlen, damit seine volle Adsorptionsfähigkeit wieder hergestellt wird.

11. Vorrichtung nach Anspruch 10, **gekennzeichnet dadurch, dass** der geschlossene Regenerationskreislauf der Filter (34, 34') einen Ozongenerator besitzt, der mit dem Stickstoffmonoxid reagiert um Stickstoffdioxid zu bilden.

12. Verfahren zur Entfernung von Staubteilchen aus einem Gasstrom, insbesondere von submikroskopisch kleinen Teilchen, unter Verwendung der Vorrichtung gemäss den vorstehenden Ansprüchen,
bei dem der betreffende Gasstrom zentrifugiert wird, um die Trennung der auszusondernden Teilchen aufgrund ihrer im Vergleich zu den Gasmolekülen hohen Masse zu bewirken, und die Teilchen durch Pyrolyse vernichtet werden, wobei die Trennung in einem oder mehreren spiralförmigen Kanälen (1) erfolgt, die jeweils mehrere Windungen aufweisen und auf ihrem inneren Umfang zum Anhalten der schweren Teilchen mit Fallen (3) versehen sind, die mit der Pyrolysekammer (4) kommunizieren, in die sie regelmäßig abgesaugt werden, wo die brennbaren Elemente vernichtet und die nicht brennbaren Elemente bis zum Entleeren bei einer Wartung gelagert werden.

## Claims

1. Device for removal of dust in a gas flow and in particular submicronic particles, especially suitable for the purification of the atmosphere when depollution at the source is inadequate due to the multiplicity of the emission points or the specific climate conditions, the essential aim being its installation in exposed urban zones of air treatment stations in order to eliminate the most dangerous and most uncomfortable pollutants,
including a dust-laden gas inlet receiving an existing flow or supplied by a suction device (6), so that the dust-laden gases enter, at 5 m/s minimum, a purification circuit of the device made up of at least a helicoidal conduit (1) comprising several coils (2) equipped each one with one or more traps (3) laid out on the part of the internal wall of the conduit corresponding to the largest diameter of the coils, and intended to catch the particles to be extracted, a system of automatic periodic opening allowing the transfer of the dust thus caught to a pyrolysis chamber (4) of the device maintained at the temperature required for pyrolysis by a means of heating (15) supplied by an external heat source, the aforementioned pyrolysis chamber being determined to destroy the combustible particles and to store the non-combustible elements for removal during maintenance interventions, a suction means creating a depression to facilitate the transfer of dust and to remove the purified gases to the atmosphere through a system of filters retaining the non-combustible elements.

2. Device according to claim 1, **characterized by** the fact that the traps (3) consist of an insert forming a conical conduit through the wall of the helicoid conduit (1) ending in a stop plate (33) of a few tenths of millimetres placed on the inside of the aforesaid conduit and sloping against the direction of the fluid circulation.

3. Device according to any of the preceding claims, **characterized by** the fact that the traps (3), communicate with the pyrolysis chamber (4) by transfer tubes (5) each one comprising a closure valve (8) that is opened periodically by an automatic system (7) controlled by a timer or detector, so as to allow the dust to be drawn into the pyrolysis chamber 4.

4. Device according to any of claims 1 and 2, **characterized by** the fact that the dust is separated out by a series of centrifugation cells (20) fitted in parallel inside a sealed chamber (21) for dust recovery communicating with the pyrolysis chamber (4) by an inlet valve (22) which opens periodically, each one of these cells forming a separate helicoidal conduit (1).

5. Device according to any of the preceding claims, **characterized by** the fact that the means of suction to create a depression in the pyrolysis chamber (4) consist of a venturi (10) through which pass dust-free gases after their passage in the helicoidal conduit (1), and whose suction inlet is connected by means of a control valve (11) to the outlet of the aforementioned pyrolysis chamber.

6. Device according to any of claims 1 to 4, **characterized by** the fact that the suction means creating a depression in the pyrolysis chamber (4) consist of a vacuum pump (29) sucking in the dust through a filter (14) equipped with an unclogging circuit (30), the dust-free air sucked in by the vacuum pump being injected into the main circuit at the outlet of the centrifugation cells, after passage in a cooler (31).

7. Device according to any of the preceding claims, **characterized by** the fact that the gases from the pyrolysis chamber (4) are depolluted by being passed over reduction catalysts (12) and oxidation catalysts (13) and freed of non-combustible dust by a 0.3 micrometer filter (14).

8. Device according to any of the preceding claims, **characterized by** the fact that the oxygen necessary for complete pyrolysis, in the event that the carrier gas does not contain enough, is equipped with a fresh air intake (18) equipped with a non-return system (19), intake, controlled by a flow control valve, being assured by the depression produced in the pyrolysis chamber (4).

9. Device according to any of the preceding claims, **characterized by** the fact that the temperature of the catalysis chamber 4 is maintained by means of a heat exchanger in which passes gas to be treated and installed before or after the purification circuit.

10. Device according to any of the preceding claims, **characterized by** the fact that a double battery of low pressure drop filters (34, 34') made up of adsorbents is installed at the outlet of the centrifugation circuit, the aforementioned adsorbents retaining until saturation the toxic gas compounds to be eliminated such as benzene, dioxide or sulphur nitrogen, 1:3 butadiene, hydrogen sulphide, N20, C02, CO, etc, and causing the dissociation of ozone in oxygen, the two filters (34, 34') being arranged so that only one filter is active at a given time, the other being in the regeneration phase thanks to a closed desorption and catalytic reaction circuit, open to the atmosphere at the end of the cycle and comprising, apart from the filter to be regenerated 34 or 34', a circulator, one or two catalytic ovens (a reducer for nitrogen oxides and an oxidant for the volatile organic compounds and the carbon monoxide), an air outlet to the atmosphere, through the active filter, controlled by motorized valve, and finally an automatic valve for intake at the end of the regeneration cycle of the pure air coming from the active filter outlet and intended to completely clean the filter before it is restarted and to cool it to regenerate its adsorbent efficiency.

11. Device according to claim 10, **characterized by** the fact that the regeneration closed circuit of filters (34, 34') comprises an ozone generator which reacts with nitrogen oxide to produce nitrogen dioxide.

12. Process of dust removal from a gas flow and in particular of submicronic particles, based on the use of the device according to the preceding claims,
in which the said gas flow is subjected to forced centrifugation in order to cause the separation of the particles to be extracted thanks to the big difference in their mass compared to the gas molecules, and the destruction of these particles by pyrolysis, separation being performed in the multicoil helicoidal conduits (1) provided with traps (3) at their internal periphery in order to catch the heavy particles and communicating each one with the pyrolysis chamber (4) into which they are periodically drawn and where combustible elements are destroyed and where the non-combustible elements are stored for removal during maintenance.
